(19) Europäisches Patentamt
European Patent Office
Office européen des brevets

(11) Veröffentlichungsnummer: **0 639 602 A2**

(12) **EUROPÄISCHE PATENTANMELDUNG**

(21) Anmeldenummer: **94112372.1**

(51) Int. Cl.[6]: **C08G 63/692**

(22) Anmeldetag: **08.08.94**

(30) Priorität: **17.08.93 DE 4327616**

(43) Veröffentlichungstag der Anmeldung: **22.02.95 Patentblatt 95/08**

(84) Benannte Vertragsstaaten: **DE FR IT NL**

(71) Anmelder: **HOECHST AKTIENGESELLSCHAFT**
**Brüningstrasse 50**
**D-65929 Frankfurt am Main (DE)**

(72) Erfinder: **Ueberdiek, Ralf**
**Seidelbastweg 1**
**D-86399 Bobingen (DE)**
Erfinder: **Hüsing, Eckhard**
**Alpenblickstrasse 20**
**D-86836 Obermeitingen (DE)**

(54) **Verfahren zur Herstellung von Polyestern mit verbessertem Weissgrad.**

(57) Beschreiben wird ein Verfahren zur Herstellung linearer Polyester mit verbessertem Weißgrad und geringer Gelbzahl durch Veresterung von aromatischen Dicarbonsäuren oder Umesterung von deren Bis-niederalkylestern, und ggf. aliphatischen Dicarbonsäuren mit Diolen zu Bis-Diolestern und deren Oligomeren und Weiterkondensation dieser Vorprodukte zu spinnfähigen Polyestern, das dadurch gekennzeichnet ist, daß dem Veresterungs-, Umesterungs- oder Polykondensationsansatz 0,5 bis 15 Gew% von phosphorhaltigen Modifizierungsmitteln zugefügt werden und daß die Polykondensation zunächst in der Schmelze bis zu einer IV von 0,4 bis 0,55 dl/g und danach in fester Phase bis zu einer IV von 0,62 bis 0,72 durchgeführt wird, wobei die angegebenen IV-Werte für die Messung bei 25 °C in Dichloressigsäure gelten.
Als phosphorhaltige Modifizierungsmittel werden vorzugsweise solche der Formeln V oder VI

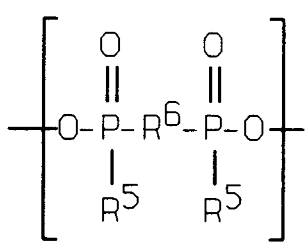

(V)

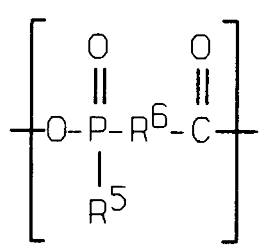

(VI)

worin $R^6$ Alkylen oder Polymethylen mit 2 bis 6 C-Atomen oder Phenyl und $R^5$ Alkyl mit 1 bis 6 C-Atomen, Aryl oder Aralkyl bedeutet, einkondensiert enthalten. Ferner werden beschrieben die nach dem Verfahren erhaltenen Polyester und Fasermaterialien aus diesen Polyestern.

EP 0 639 602 A2

Die vorliegende Erfindung betrifft ein Verfahren zur Herstellung linearer Polyester mit verbessertem Weißgrad und geringer Gelbzahl, die zur Herstellung von Fasermaterialien für den textilen Anwendungsbereich geeignet sind. Das erfindungsgemäße Verfahren, bei dem die Polykondensation in zwei Stufen ausgeführt wird, ist besonders wertvoll zur Herstellung von modifizierten Polyestermaterialien wie z.B. schwer entflammbaren Polyestern, die aufgrund der Modifizierungsbestandteile in verstärktem Maß zur Gelbfärbung neigen.

Die Herstellung von Polyestern, die zur Produktion von Polyesterfasern eingesetzt werden, erfolgt durch Veresterung von Dicarbonsäuren mit Diolen, wobei zunächst die Diester der Dicarbonsäuren mit den Diolen und deren Oligomere gebildet werden und anschließende Kondensation dieser Vorprodukte zu Polyestern mit der zum Verspinnen erforderlichen Kettenlänge. Die Kondensation bei der die Kettenlänge auf den für die Herstellung von Fasern erforderlichen Wert anwächst, wird bei erhöhter Temperatur durchgeführt und ist in der Regel von einer Reihe von Nebenreaktionen begleitet. Das Ausmaß der Nebenreaktion hängt ab von der Wahl der Ausgangsmaterialien, der Veresterungs- bzw. Umesterungskatalysatoren und der eventuell in die Polyesterkette einzubauenden Modifizierungskomponenten. Aufgrund der Nebenreaktionen werden Stoffe gebildet, die entweder bereits bei der Kondensationsreaktion oder später beim Spinnprozeß zu einer Vergilbung des Polyestermaterials und damit der ersponnenen Fasern führen.

Außer von den gewählten Ausgangsmaterialien und Zusatzstoffen ist das Ausmaß der zur Vergilbung führenden Nebenreaktionen selbstverständlich auch von den Kondensationsbedingungen abhängig unter denen die Polyesterbildung ausgeführt wird. Für unmodifizierte Polyestermaterialien, insbesondere für Polyethylenterephthalat ist es in der Praxis gelungen, Veresterungs- und Kondensationsbedingungen zu finden, bei denen Polyester mit für die Praxis ausreichend geringer Vergilbungsneigung erhalten werden. Für modifizierte Polyester konnte dieses Ziel bisher noch nicht in allen Fällen erreicht werden.
Insbesondere hat es sich als schwierig erwiesen, z.B. schwer entflammbare Polyester, die phosphorhaltige Verbindungen enthalten, in der für textile Anwendungen erforderlichen und gewünschten Qualität bezüglich Weißgrad und Gelbzahl herzustellen. Üblicherweise werden derartig modifizierte Polyester wie auch die unmodifizierten, durch Veresterung von Dicarbonsäuren und Diolen oder Umesterung von Dicarbonsäurediniederalkylestern mit Diolen und anschließende Polykondensation auf die für das Spinnen erforderliche Kettenlänge, gekennzeichnet durch eine Intrinsic-Viskosität von etwa 0,6 bis 0,75 dl/g, hergestellt. Die Polykondensation erfolgt dabei in der Regel nach Zugabe eines Polykondensationskatalysators in der Schmelze bei Temperaturen von 270 bis 300 °C und einem Druck bis herab zu 0,1 mbar.

Durch die Phosphormodifizierung des Polyesters werden zwar sehr gute und permanente flammwidrige oder selbstverlöschende Eigenschaften erzielt, andererseits wird aber unter den genannten Bedingungen der üblichen Schmelzpolykondensation der Diglykolgehalt des erhaltenen Polyesters erhöht und sein Schmelzpunkt erniedrigt. Ferner ist festzustellen, daß durch die Phosphormodifizierung der hydrolytische, thermische und thermooxidative Abbau der Polyesterketten in verstärktem Maße auftritt. Dieser Abbau macht sich insbesondere beim Trocknen und Verspinnen des modifizierten Polyesters bemerkbar. Er führt in der Folge zu einer Herabsetzung der für Polyesterfasern charakteristischen Eigenschaften wie Reißfestigkeit, Anfangsmodul und Anfärbbarkeit.

Darüberhinaus treten wie bereits oben ausgeführt, durch die Anwesenheit des Modifizierungsmittels im verstärktem Maße Nebenreaktionen bei der Polykondensation auf, die sich nachteilig auf den Weißgrad und die Gelbzahl, aber auch zusätzlich auf die Reißfestigkeit auswirken. Besonders beim Einsatz derartig modifizierter Polyester als rohweiße Fäden und Fasern macht sich die Gelbfärbung nachteilig bemerkbar.

Die Verringerung der mechanischen Festigkeit und Eigenschaften des aus modifizierten Polyestern erhältlichen Fasermaterials führt auch in der Folge bei der textilen Verarbeitung vermehrt zu Fehlern, wie z.B. Fadenbrüchen oder Ungleichmäßigkeiten beim Verstreckprozeß.

Nach dem Stand der Technik versucht man der Verschlechterung der mechanischen textiltechnischen Daten der modifizierten Polyesterfasermaterialien dadurch zu begegnen, daß man die Polykondensationstemperaturen und Spinntemperaturen so niedrig wie möglich hält, und eine möglichst schonende Trocknung der Granulatschnitzel vor dem Verspinnen ausführt. Die erhöhte Vergilbungsneigung des Polyestermaterials versucht man durch Zusatz von optischen Aufhellern auszugleichen. Beide Maßnahmen haben aber Nachteile. So sinkt bei einer niedrigeren Kondensationstemperatur die Reaktionsgeschwindigkeit erheblich, sodaß längere Kondensationszeiten erforderlich werden, was nicht nur unwirtschaftlich ist sondern auch wieder die Bildung unerwünschter Nebenprodukte fördern kann. Der Zusatz von optischen Aufhellern stellt eine Kosten verursachende zusätzliche Maßnahme dar und ist darüberhinaus auch nicht voll befriedigend, da Aufheller, wie Farbstoffe allgemein, einem lichtinduzierten Abbau unterliegen, wodurch ihre Wirksamkeit mit der Zeit nachläßt und möglicherweise sogar noch farbige Abbauprodukte gebildet werden.

Es bestand daher ein dringendes Bedürfnis, nach einem Verfahren zur Herstellung von Polyestermaterialien, die für die Produktion textiler Fasern verwendet werden sollen, das die genannten Nachteile des

bekannten Verfahrens nicht aufweist und insbesondere zu Polyestern führt, die einen höheren Weißgrad und eine verminderte Gelbzahl aufweisen.

Aus der DE-A-1 495 574 ist es bereits bekannt, unmodifizierte Polyester, insbesondere unmodifiziertes Polyethylenterephthalat, mit einem mittleren Molekulargewicht von mindestens 14000 bis 50000 und entsprechender Intrinsic-Viskosität in einem zweistufigen Verfahren herzustellen, wobei in der ersten Stufe eine Schmelzkondensation bis zu Intrinsic-Viskositäten von 0,33 bis 0,45 ausgeführt wird, und der so erhaltene Polyester anschließend pulverisiert oder pelletiert wird und einer Feststoffkondensation unterworfen wird.

Vorzugsweise wurde dieses Verfahren für die Herstellung von Polyestern eingesetzt, die für die Produktion hochfester technischer Fasern und Filamente verwendet werden.

Es hat sich nun gezeigt, daß ein zweistufiges Verfahren, wie es bisher stets nur eingesetzt worden ist, zur Herstellung von unmodifizierten Polyestern, insbesondere solchen mit besonders hohem mittleren Molekulargewicht und entsprechend hoher Intrinsic-Viskosität, wie sie für die Erzeugung hochfester technischer Filamente und Fasern benutzt werden, sich sehr gut dazu eignet, schwer entflammbare Polyestermaterialien zur Herstellung von Fasern für den textilen Anwendungsbereich, d.h. mit mittleren Molekulargewichten entsprechend Intrinsic-Viskositäten von etwa 0,6 bis 0,75 herzustellen, die einen erheblich verbesserten Weißgrad und eine verringerte Gelbzahl aufweisen.

Gegenstand der vorliegenden Erfindung ist somit ein Verfahren zur Herstellung schwer entflammbarer linearer Polyester mit verbessertem Weißgrad und geringer Gelbzahl durch Veresterung von aromatischen Dicarbonsäuren oder Umesterung von deren Bis-niederalkylestern und gegebenenfalls aliphatischen Dicarbonsäuren mit Diolen zu Bisdiolestern und deren Oligomeren und Weiterkondensation dieser Vorprodukte zu spinnfähigen Polyestern bei dem dem Veresterungs-, Umesterungs- oder Polykondensationsansatz 0,5 bis 15 Gew% von phosphorhaltigen Modifizierungsmitteln zugefügt werden und

die Polykondensation zunächst in der Schmelze bis zu einer Intrinsic-Viskosität von 0,4 bis 0,55 dl/g und danach in fester Phase bis zu einer Intrinsic-Viskosität von 0,6 bis 0,75, vorzugsweise 0,62 bis 0,72 durchgeführt wird.

Die angegebenen Werte der Intrinsic-Viskosität gelten für die Durchführung der Messung bei 25 °C in Dichloressigsäure.

Durch die Teilung des Polykondensationsprozesses beim erfindungsgemäßen Verfahren in einem partiellen Anteil in der Schmelze und einen partiellen Anteil in der festen Phase wird überraschenderweise eine Verbesserung des Weißgrades und der Helligkeit sowie eine Reduzierung der Gelbzahl des schwer entflammbaren, modifizierten Polyesters erreicht. Darüberhinaus ergibt sich bei Fasermaterialien, die aus dem erfindungsgemäß hergestellten Polyester produziert werden, eine deutliche Verbesserung der textilen mechanischen Eigenschaften, was zu der Vermutung Anlaß gibt, daß bei dem erfindungsgemäßen Verfahren der Anteil der Nebenreaktionen, insbesondere die Abbaureaktion hydrolytischer, thermischer und thermooxidativer Abbau zurückgedrängt wird.

Das erfindungsgemäße zweistufige Herstellungsverfahren führt somit generell zu einer Verbesserung von Helligkeit und Weißgrad und einer Verringerung der Gelbzahl und eignet sich insbesondere für die Herstellung von solchen durch Zusatz von phosphorhaltigen Modifizierungsmitteln modifizierten Polyestern, die in der Polymerkette aromatische Reste enthalten. Das phosporhaltige Modifizierungsmittel kann, je nach seiner chemischen Struktur, in den erfindungsgemäß hergestellten Polyestern als physikalische Mischungskomponente enthalten oder in die Ketten dieser modifizierten Polyester eingebaut sein. Sein Anteil am Polyestergewicht beträgt zweckmäßigerweise 0,5 bis 15 Gew.-%.

Im übrigen sind die Polymerketten der Polyester aus 0 bis 100 Mol.-% Baugruppen der Formel I

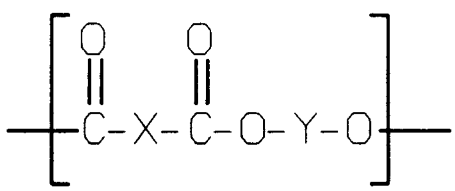

(I)

und 100 bis 0 Mol.-% Baugruppen der Formel II

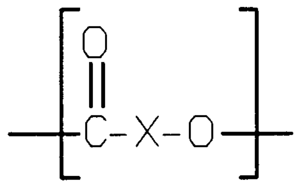

(II)

aufgebaut, worin
X zu mehr als 75 Mol.-% aromatische Reste mit 5 bis 16, vorzugsweise 6 bis 12 C-Atomen und maximal 25 Mol.-% aliphatische Reste mit 4 bis 10 Kohlenstoffatomen, vorzugsweise 6 bis 8 Kohlenstoffatomen,
Y zu mindestens 85 Mol.-% Alkylen oder Polymethylengruppen mit 2 bis 4 Kohlenstoffatomen und zu maximal 15 Mol.-% längerkettige Polymethylen, Alkylengruppen oder Cycloalkylengruppen, vorzugsweise mit bis zu 8 Kohlenstoffatomen sowie zweiwertige Reste, die sich von Diglykol, Triglykol oder Polyglykol ableiten.

Vorzugsweise enthalten Polyester, die Baugruppen der Formel II enthalten, 70 bis 99 Mol.-% ,insbesondere 85 bis 95 Mol.-%, Baugruppen der Formel I und 1 bis 30 Mol.-%, insbesondere 5 bis 15 Mol.-%, Baugruppen der Formel II.

Bevorzugt werden Polyester hergestellt, in denen X mindestens 95 Mol.-% aromatische und maximal 5 Mol.-% aliphatische Reste bedeuten, insbesondere aber solche, in denen X ausschließlich für aromatische Reste steht.

Bevorzugte aromatische Reste, für die X steht, sind 1,4- und 1,3-Phenylen, 1,4-, 1,5-, 1,8-, 2,6- und 2,7-Naphthylen, 4,4'-Biphenylylen, Furylen und Reste der Formel III

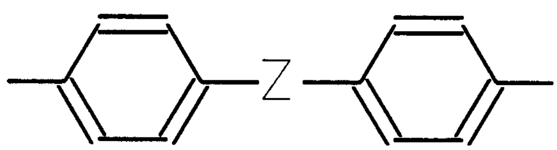

(III)

worin
Z Polymethylen oder Alkylen mit 1 bis 4 Kohlenstoffatomen, $-SO_2-$, -COO-, -O- oder -S- bedeutet.

Die aromatischen Reste können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie
die längerkettigen, für Y stehenden Baugruppen werden insbesondere dann in die Polyesterkette eingebaut, wenn beispielsweise eine Modifizierung der mechanischen Eigenschaften oder der Schmelzcharakteristik des Polyesters erwünscht ist. Bevorzugt sind Polyester, die weniger als 7 % dieser modifizierend wirkenden Komponenten enthalten.

Beispiele von Alkylen oder Polymethylengruppen mit 2 bis 4 C-Atomen, für die Y steht, sind Ethylen, Propan-1,3-diyl, Butan-1,4-diyl. Längerkettige Polymethylengruppen, für die Y steht, sind z.B. 3-Ethylhexan-1,6-diyl oder Octan-1,8-diyl. Ein bevorzugter cycloaliphatischer Baustein, für den Y steht ist der sich von 1,4-bis-hydroxymethyl-cyclohexan ableitende 1,4-bismethylen-cyclohexan.

Eine Gruppe bevorzugter Polyester weist eine Polymerkette auf, die, neben den gegebenenfalls in die Kette eingebauten phosphorhaltigen Modifizierungsbausteinen, ausschließlich Bausteine der Formel IV

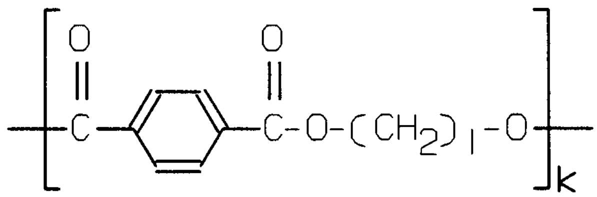

(IV)

worin l eine Zahl von 2 bis 6 und k eine Zahl über 10 ist, enthält.

Selbstverständlich können auch Polyester deren Kette neben den eventuell eingebauten Phosphor enthaltenden Bausteinen nur Ethylenterephthalatgruppen enthalten, sowie phosphormodifizierte Polyester, die mindestens 85 Mol-%, vorzugsweise 95 Mol-% Ethylenterephthalat-Einheiten und bis zu 15 Mol-%, vorzugsweise bis zu 5 Mol % Dicarbonsäure-Einheiten und Diol-Einheiten die als sogenannte Modifizierungsmittel wirken, enthalten, mit Vorteil nach dem erfindungsgemäßen Verfahren hergestellt werden.

Eine weitere bevorzugte Gruppe von phosphormodifizierten Polyestern aromatischer Dicarbonsäuren sind solche, die den oben genannten Formeln entsprechen, insbesondere phosphormodifiziertes Polyethylenterephthalat, die zusätzlich durch Einbau von bis zu 10 Mol.-% anderer Bausteine aus den oben genannten Gruppen so modifiziert worden ist, daß bestimmte Gebrauchseigenschaften erhalten werden, wie z.B. Polyethylenterephthalat, das durch Einbau von Sulfogruppen enthaltenden Bausteinen (z.B. Sulfoisophthalsäure) eine Affinität zu basischen Farbstoffen erhalten hat.

Besonders wertvoll ist das erfindungsgemäße Verfahren zur Herstellung der Polyester der oben angegebenen Strukturen, die phosphorhaltige Modifizierungsmittel aufweisen und dadurch flammhemmende und oder selbstverlöschende Eigenschaften erhalten, weil es mit diesem Verfahren erstmals gelungen ist, diese besonders wertvollen Polyester auf einfache Weise in hervorragender optischer Qualität bei gleichzeitig sehr guten textiltechnischen Eigenschaften zu erzeugen.

Vorzugsweise wird dem Veresterungs-, Umesterungs- oder Polykondensationsansatz ein phosphorhaltiges kondensationsfähiges Modifizierungsmittel, das in die Polyesterkette chemisch eingebaut werden kann, zugefügt.

Eine nach dieser bevorzugten Ausführungsform des erfindungsgemäßen Verfahrens hergestellte besonders bevorzugte Gruppe von Polyestern sind solche, die den oben genannten Formeln entsprechen, insbesondere Polyethylenterephthalat, die Reste von Phosphinsäurederivaten, z.B. solchen der Formeln

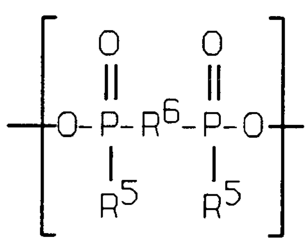

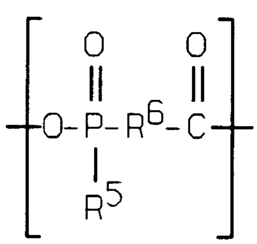

(V) und (VI)

worin $R^6$ Alkylen oder Polymethylen mit 2 bis 6 C-Atomen oder Phenyl und $R^5$ Alkyl mit 1 bis 6 C-Atomen, Aryl oder Aralkyl bedeutet, einkondensiert enthalten. Vorzugsweise bedeuten in den Formeln V und VI $R^6$ Ethylen und $R^5$ Methyl, Ethyl, Phenyl, oder o-, m- oder p-Methyl-phenyl, insbesondere Methyl.

Zweckmäßigerweise wird die Polykondensation soweit sie in der Schmelze erfolgt, bei einer Temperatur von 270 bis 290 °C, vorzugsweise von 275 bis 285 °C durchgeführt.

Die zweite Stufe der Polykondensation, die in fester Phase erfolgt, wird zweckmäßigerweise bei einer Temperatur von 190 bis 240 °C, vorzugsweise von 205 bis 225 °C durchgeführt. Die Polykondensation in fester Phase kann diskontinuierlich beispielsweise in einem Taumeltrockner oder aber kontinuierlich in einem Rohrreaktor durchgeführt werden. Zweckmäßigerweise erfolgt die Polykondensation in fester Phase im Vakuum und/oder unter einem Schutzgas.

Besonders bevorzugt ist es, die Feststoffkondensation bis zu einer Intrinsic-Viskosität von 0,65 bis 0,69 dl/g auszuführen.

Das erfindungsgemäße Verfahren kann zur Herstellung von unmattierten oder mattierten Polyestermaterialien eingesetzt werden. Für die Herstellung tiefmatter Polyester werden in den Polyester während oder nach seiner Herstellung 1 bis 2 Gew.-%, vorzugsweise 1,2 bis 1,5 Gew.-% eines Mattierungsmittels eingearbeitet. Matte Polyester werden erhalten durch die Einarbeitung von 0,25 bis 0,6, vorzugsweise 0,3 bis 0,5 Gew.-% des Mattierungsmittels. In der Regel werden auch Polyestern, die keinen ausgesprochenen Mattierungseffekt aufweisen sollen, sogenannten Glanz-Typen, geringe Mengen von Mattierungsmitteln zugefügt. So ist es üblich und auch für das erfindungsgemäße Verfahren durchführbar, in Polyester, die zur Herstellung von Fasern ohne ausgesprochenen Mattierungseffekt dienen sollen, bis zu 0,06 Gew.-%, vorzugsweise bis zu 0,05 Gew.-% eines Mattierungsmittels einzuarbeiten.

Als Mattierungsmittel wird vorzugsweise Titandioxyd eingesetzt.

Eine weitere besonders bevorzugte Ausführungsform des erfindungsgemäßen Verfahrens besteht darin, daß die Feststoffkondensation dem Verspinnen des Polyesters zu Fasern direkt vorgelagert wird. Der Vorteil dieser Ausführungsform besteht darin, daß der sonst übliche Trocknungsschritt des Polyesters vor dem Verspinnen eingespart werden kann und daß überraschenderweise gegenüber dem herkömmlichen Prozeß eine signifikante Verringerung der Spinnfehler eintritt.

Ein weiterer Gegenstand der vorliegenden Erfindung sind die nach dem erfindungsgemäßen Verfahren erhaltenen Polyester mit einer Intrinsic-Viskosität von 0,6 bis 0,75 dl/g, vorzugsweise 0,62 bis 0,72 dl/g, die sich gegenüber herkömmlich hergestellten durch einen Weißgrad von über 85 % und eine Gelbzahl von unter 2 auszeichnen.

Bevorzugte erfindungsgemäß hergestellte Polyester entsprechen den oben angegebenen Formeln I, II und IV, und den dazu angegebenen Definitionen. Insbesondere enthalten sie mindestens 85 Mol-%, vorzugsweise mindestens 95 Mol-% Ethylenterephthalat-Einheiten und max. bis zu 15 Mol-%, vorzugsweise bis zu 5 Mol-% Dicarbonsäure-Einheiten und Glykol-Einheiten, die als sogenannte Modifizierungsmittel wirken.

Besonders bevorzugt sind nach dem erfindungsgemäßen Verfahren erhaltene schwer entflammbare und/oder selbstverlöschende Polyester der oben angegebenen Grundstrukturen, die ein phosphorhaltiges Modifizierungsmittel, vorzugsweise ein phosphorhaltiges in die Polyesterkette einkondensiertes Modifizierungsmittel enthalten.

Besonders bevorzugt sind dabei solche, die den oben genannten Formeln entsprechen, insbesondere Polyethylenterephthalat, die Reste von Phosphinsäurederivaten, z.B. solchen der Formeln

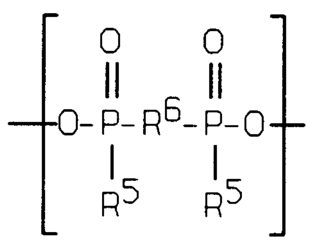 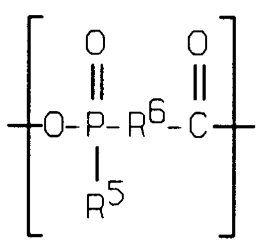

(V) und (VI)

worin $R^6$ Alkylen oder Polymethylen mit 2 bis 6 C-Atomen oder Phenyl und $R^5$ Alkyl mit 1 bis 6 C-Atomen, Aryl oder Aralkyl bedeutet, einkondensiert enthalten. Vorzugsweise bedeuten in den Formeln V und VI $R^6$ Ethylen und $R^5$ Methyl, Ethyl, Phenyl, oder o-, m- oder p-Methyl-phenyl, insbesondere Methyl.
Das phosphorhaltige Modifizierungsmittel ist üblicherweise in dem Polyester in einer Menge von 0,5 bis 15 Gew.-%, vorzugsweise 1,5 bis 6 Gew.-% enthalten.

Die erfindungsgemäßen Polyester können auch bis zu 2 % Mattierungsmittel enthalten. Soll der Polyester zur Herstellung tiefmatter Filamente und Fasern benutzt werden, so enthält er üblicherweise 1 bis 2, vorzugsweise 1,2 bis 1,5 Gew.-% Mattierungsmittel. Für die Herstellung von Filamenten und Fasern mit geringerem Mattierungseffekt ist es üblich, Polyester einzusetzen, die 0,25 -bis 0,6 Gew.-%, vorzugsweise 0,3 bis 0,5 Gew.-% Mattierungsmittel enthalten, zur Herstellung unmattierter Fasern werden erfindungsgemäße Polyester eingesetzt, die nur bis zu 0,06 Gew.-%, vorzugsweise bis zu 0,05 Gew.-% Mattierungsmittel enthalten. Bevorzugtes Mattierungsmittel für die nach dem erfindungsgemäßen Verfahren hergestellten Polyester ist Titandioxyd.

Ein weiterer Gegenstand der vorliegenden Erfindung ist Polyesterfasermaterial, das aus dem nach dem erfindungsgemäßen Verfahren hergestellten Polyester produziert worden ist. Polyesterfasermaterial im

Sinne der vorliegenden Erfindung sind Endlosfasern in allen Zusammensetzungen und Bearbeitungszuständen, z.B. in Form von Endlosfasergarn, Tau, Haufwerk oder Faservlies, sowie daraus hergestellte Weiterverarbeitungsprodukte wie Gewebe oder Gewirke, aber auch Stapelfasern in allen Verarbeitungszuständen, wie z.B. in Form von Flocke, Vlies, Spinnfasergarn oder daraus hergestellte Sekundärprodukte wie Gewebe und Gewirke.

Der Titer der aus den erfindungsgemäß hergestellten Polyestern produzierten Fasern liegt in der Regel im Bereich von 0,5 bis 17 dtex, vorzugsweise von 0,6 bis 5 dtex, entsprechend ihrer bevorzugten Anwendung im Textilsektor.

Die Titer im unteren Teil des angegebenen Bereichs, insbesondere von 0,5 bis 1,2 dtex werden vorteilhafterweise durch Hochgeschwindigkeits-Spinnverfahren, bei denen unmittelbar vollorientierte Filamente (FOY) erhalten werden können, hergestellt. Hierzu wird das erfindungsgemäße Verfahren mit hohen Abzugsgeschwindigkeiten betrieben, bei denen die Luftreibung der ersponnenen, laufenden Filamente für den Aufbau der zur Vollorientierung erforderlichen Verstreckspannung ausreicht.

Für spezielle Anwendungen, wie z.B. für die Herstellung versteifender Monofilamente können selbstverständlich auch stärkere Titer aus den erfindungsgemäß hergestellten Polyestern produziert werden. Die erfindungsgemäßen Fasern können glatt oder gekräuselt sein, wobei die Kräuselung durch alle bekannten Texturierverfahren, wie z.B. durch Stauchkammerkräuselung, das knit-deknit-Verfahren oder durch Falschdrahttexturierung herbeigeführt worden sein kann. Die erfindungsgemäßen Fasermaterialien weisen runde oder multilobale vieleckige oder sternförmige Querschnitte auf. Bevorzugt sind für die erfindungsgemäßen Fasern der runde Querschnitt sowie ein dreieckiger oder ein dreiarmig sternförmiger Querschnitt.

Die sehr guten mechanischen Eigenschaften der erfindungsgemäßen Fasern äußern sich in einer feinheitsbezogene Festigkeit von 25 bis 50 cN/tex, vorzugsweise 30 bis 45 cN/tex, einer Reißdehnung von 15 bis 50 %, vorzugsweise 20 bis 45 % sowie einem Trockenhitzeschrumpf, gemessen bei 200 °C von 10 bis 25 %, vorzugsweise 12 bis 22 %.

In Kombination mit diesen guten mechanischen Eigenschaften haben die erfindungsgemäß hergestellten Fasern, obwohl sie durch den Einbau von phosphorhaltigen Polyesterbausteinen schwer entflammbar modifiziert worden sind, einen Weißgrad von über 85 %, vorzugsweise von 85 bis 90 % und eine Gelbzahl von unter 2, vorzugsweise von -2 bis +2.

Die Intrinsic-Viskosität des Fasermaterials liegt im Bereich von 0,60 bis 0,66 dl/g, vorzugsweise von 0,62 bis 0,64 dl/g.

Die folgenden Ausführungsbeispiele veranschaulichen die Ausführung des erfindungsgemäßen zweistufigen Polyesterherstellungsverfahrens, die Herstellung von Fasermaterialien aus den nach dem erfindungsgemäßen Verfahren produzierten Polyester und zeigen die an den erhaltenen Fasermaterialien bestimmten Werte von Helligkeit, Weißgrad, Gelbzahl und mechanischen Festigkeitsdaten.

Der subjektive Eindruck und die objektiv bestimmbaren Meßgrößen für Gelbzahl, Helligkeit und Weißgrad sind vom Titer und vom Einzelfilament-Titer des Garns abhängig. Das erfindungsgemäße Verfahren zeigt seine Vorteile besonders bei feinen Einzelfilament-Titern. Die Beispiele wurden deshalb mit einem Garn dtex 76 f 64 durchgeführt.

Zur Herstellung dieser feinen Titer bewährt sich besonders das FOY-Verfahren, das von Tekaat in Chemiefaser/Textilindustrie 39/89 (1987) Seite 794 ff. beschrieben worden ist. Die erfindungsgemäß herstellbaren Polyester können aber auch nach den klassischen Spinnverfahren - Herstellung eines niedrig orientierten Garns (LOY) oder eines teilorientierten Garns (POY) + Verstrecken, Strecktexturieren oder Streckzwirnen - zu textilen Fasermaterialien verarbeitet werden.

Die Messung des Weißgrades nach Ganz, der Gelbzahl und der Helligkeit erfolgt mit einem Meßgerät "Elrepho 2000" der Fa. Datacolor.

Die Messung mit diesem Gerät setzt ganzflächig bewickelte Probenträger mit möglichst homogener, planarer Meßfäche voraus. Zur Probenvorbereitung werden die zu messenden Garne mit dem Wickelgerät der Fa. Zweigle Typ V 701 in 6 Lagen planar auf einen weißen Probenträger aufgewickelt. Die bewickelten Plättchen wurden dann am Elrepho 2000 gemessen.

Die gewünschten Meßwerte Gelbzahl, Helligkeit und Weißgrad werden vom Gerät ermittelt und ausgegeben. Dabei werden zunächst die Reflexionsfaktoren $R_x$, $R_y$ und $R_z$ nach DIN 53140 gemessen.

Die Helligkeit ist dann definiert als $R_y$.

Die Gelbzahl wird vom Gerät entsprechend folgender Formel berechnet:

$$\text{Gelbzahl} = 707{,}1 \cdot \left[ \frac{A \cdot X + B \cdot Z + 1}{A \cdot X + B \cdot Z + 1 + C \cdot Z} - V \right]$$

worin die Größen $X = R_x/R_y$ und $Z = R_z/R_y$ bedeuten und die Konstanten A,B,C und V die folgenden Werte haben:
A = 0,782; B = 0,198; C = 1,181; V = 0,626.

Die Beispiele 1 und 2 zeigen die Herstellung eines glänzenden, die Beispiele 3 und 4 die Herstellung eines matten Polyester-Fasermaterials.

Beispiel 1, einstufig gemäß Stand der Technik

Ein Umesterungsreaktor wurde mit 10 kg Dimethylterephthalat, 6 kg Ethylenglycol und 3 g Manganazetat • 4 $H_2O$ beschickt und die Mischung unter Rühren und unter Stickstoff als Schutzgas auf 140 °C erwärmt. Die Reaktionstemperatur wurde im Verlauf von 4 Stdn. auf 205 °C gesteigert und das abgespaltene Methanol und der Ethylenglycol-Überschuß abdestilliert.
Nach Beendigung der Methanolabspaltung wird dem Reaktionsgemisch 3,4 g Titandioxid (Anatas) in Form einer glykolischen Suspension und 300 g 2-Methyl-2,5-dioxo-1-oxa-2-phospholan, das bei 130 °C in 100 g Ethylenglykol gelöst wurde zugesetzt und die Schmelze noch weiter eine Stunde bei 205 bis 230 °C gerührt um die zugesetzte Phosphorverbindung einzukondensieren, das Titandioxid homogen zu verteilen und weiter den Ethylenglykol-Überschuß abzudestillieren.

Anschließend wird das geschmolzene Reaktionsprodukt in ein Polykondensationsgefäß überführt, mit 1,9 g $H_3PO_3$ und 3,5 g Antimontrioxid versetzt und unter Stickstoff bei 240 °C gerührt, wobei unter leichtem Vakuum Ethylenglycol abdestilliert wird.
Dann wird der Innendruck im Verlauf von einer Stunde auf 0,5 mbar gesenkt und dabei die Temperatur der Schmelze von 240 auf 280 °C gesteigert. Bei dieser Temperatur wird dann solange weitergerührt, bis die Schmelze eine intrinsische Viskosität, gemessen in Dichloressigsäure bei 25 °C, von 0,67 dl/g, aufweist.

Anschließend wird die Schmelze zu Strängen von 4 mm Durchmesser ausgepreßt und diese zu 5 mm langen Chips geschnitten.

Der so hergestellte Polyester wird vor dem Verspinnen in einem Trockner 10 Stunden lang bei 0,5 mbar und 160 °C getrocknet. Der getrocknete Polyester wird auf einer Spinnanlage nach der Lehre der DE-A-21 17 659 zu einem Garn vom Titer dtex 76 f 64 versponnen. Das Aufschmelzen erfolgte in einem Extruder bei 270 bis 275 °C mit 175 °C Massetemperatur und 110 bar Massedruck am Ertruderausgang. Die Spinnkesseltemperatur lag bei 280 °C.

Die ersponnenen Filamente durchlaufen zunächst eine Zone, in der sie durch Anblasen mit Luft unter den Erstarrungspunkt abgekühlt werden, danach werden die Filamente wieder auf 190 °C erwärmt und gegen die Luftreibung verstreckt. Anschließend werden die Filamente mit 0,8 Gew.-% Präparationsauftrag versehen und mit einer Geschwindigkeit von 3800 m/min abgezogen und aufgespult. Der Heizer hatte eine Temperatur von 190 °C und eine Länge von 1200 mm.

Die Eigenschaften des erhaltenen verstreckten Garns sind der Tabelle zu entnehmen.

Beispiel 2, zweistufig, erfindungsgemäß

a) Schmelzkondensation.

Entsprechend Beispiel 1 wird ein Polyester hergestellt, wobei die Schmelzekondensation jedoch nur solange durchgeführt wird, bis die Schmelze eine intrinsische Viskosität, gemessen in Dichloressigsäure bei 25 °C von 0,51 dl/g aufweist.
Anschließend wird die Schmelze zu Strängen von 4 mm Durchmesser ausgepreßt und diese zu 5 mm langen Chips geschnitten.

b)Feststoffkondensation

10 kg der in Abschnitt a) hergestellten Polyesterchips werden in einen evakuierten 30 kg-Taumeltrockner eingefüllt.

Die Chips werden bei 0,5 mbar und 140 °C 10 Minuten kristallisiert, wobei sie ständig umgewälzt werden. Nach Abschluß der Kristallisation wird der Taumeltrockner auf 210 °C erwärmt und das Material bei 0,5 mbar 14 Stunden feststoffkondensiert.

Während dieser Kondensationsphase wurden Proben der Polyesterchips entnommen und die Zunahme der intrinsischen Viskosität (IV) bestimmt. Es ergaben sich folgende Werte:
Nach 8 Std: IV = 0,59 dl/g
Nach 10 Std: IV = 0,61 dl/g
Nach 12 Std: IV = 0,64 dl/g
Nach 14 Std: IV = 0,67 dl/g
Der so hergestellte Polyester wurde ohne zusätzliche Trocknung unter genau denselben Bedingungen, wie sie im Beispiel 1 beschrieben sind, direkt versponnen und verstreckt.
Die Eigenschaften des erhaltenen verstreckten Garns sind der Tabelle zu entnehmen.

Beispiel 3, einstufig gemäß Stand der Technik

Die Herstellung des Polyesters erfolgt entsprechend dem Beispiel 1, jedoch wird nach der Methanolabspaltung 130 g Titandioxid (Anatas) in glycolischer Suspension zugefügt.

Der so hergestellte Polyester wurde unter genau denselben Bedingungen, wie sie im Beispiel 1 beschrieben sind, getrocknet, versponnen und verstreckt.
Die Eigenschaften des erhaltenen Garns sind der Tabelle zu entnehmen.

Beispiel 4, zweistufig, erfindungsgemäß

a) Schmelzkondensation.

Die Herstellung des Polyesters erfolgt entsprechend dem Beispiel 2, jedoch wird nach der Methanolabspaltung 130 g Titandioxid (Anatas) in glycolischer Suspension zugefügt.

b)Feststoffkondensation

Die Feststoffkondensation erfolgt entsprechend Beispiel 2.
Der so hergestellte Polyester wurde ohne zusätzliche Trocknung unter genau denselben Bedingungen, wie sie im Beispiel 1 beschrieben sind, direkt versponnen und verstreckt.
Die Eigenschaften des erhaltenen verstreckten Garns sind der Tabelle zu entnehmen.

Tabelle

| Beispiel | 1 | 2 | 3 | 4 |
|---|---|---|---|---|
| Chips | | | | |
| Intrinsic Viscosity [dl/g] | 0,67 | 0,67 | 0,67 | 0,67 |
| Verstrecktes Garn | | | | |
| Intrinsic Viscosity [dl/g] | 0,628 | 0,63 | 0,625 | 0,631 |
| Titer [dtex] | 76 | 76 | 76 | 76 |
| Filamentzahl | 64 | 64 | 64 | 64 |
| Mattierung $TiO_2$ [Gew.-%] | 0,034 | 0,034 | 1,3 | 1,3 |
| Weißgrad (nach Ganz) | 72,4 | 89,3 | 67,0 | 87 |
| Gelbzahl | 1,84 | 0,61 | 5,6 | 1,3 |
| Helligkeit | 79,4 | 80,3 | 88,3 | 89,1 |
| Feinheitsbez. Reißfestigkeit [cN/tex] | 36,3 | 37,5 | 36,8 | 37,3 |
| Reißdehnung [%] | 45,2 | 46,0 | 45,8 | 46,4 |
| Trockenhitze-Schrumpf 200 ° C [%] | 12,5 | 12,4 | 12,6 | 12,7 |

**Patentansprüche**

1. Verfahren zur Herstellung linearer Polyester mit verbessertem Weißgrad und geringer Gelbzahl durch Veresterung von aromatischen Dicarbonsäuren oder Umesterung von deren Bis-niederalkylestern, und ggf. aliphatischen Dicarbonsäuren mit Diolen zu Bis-Diolestern und deren Oligomeren und Weiterkondensation dieser Vorprodukte zu spinnfähigen Polyestern, dadurch gekennzeichnet, daß dem Veresterungs-, Umesterungs- oder Polykondensationsansatz 0,5 bis 15 Gew% von phosphorhaltigen Modifizierungsmitteln zugefügt werden und daß die Polykondensation zunächst in der Schmelze bis zu einer IV von 0,4 bis 0,55 dl/g und danach in fester Phase bis zu einer IV von 0,62 bis 0,72 durchgeführt wird, wobei die angegebenen IV-Werte für die Messung bei 25 ° C in Dichloressigsäure gelten.

2. Verfahren gemäß Anspruch 1, dadurch gekennzeichnet, daß die Polyester mindestens 85 mol% Ethylenterephthalat-Einheiten und maximal 15 mol% Dicarbonsäureeinheiten und Dioleinheiten, die als sogenannte Modifizierungsmittel wirken, enthalten.

3. Verfahren gemäß mindestens einem der Ansprüche 1 und 2, dadurch gekennzeichnet, daß die Polyester mindestens 95 mol% Ethylenterephthalat-Einheitenenthalten.

4. Verfahren gemäß mindestens einem der Ansprüche 1 bis 3, dadurch gekennzeichnet, daß dem Veresterungs-, Umesterungs- oder Polykondensationsansatz 1,5 bis 6 Gew% von phosphorhaltigen Modifizierungsmitteln zugefügt werden.

5. Verfahren gemäß mindestens einem der Ansprüche 1 bis 4, dadurch gekennzeichnet, daß dem Veresterungs-, Umesterungs- oder Polykondensationsansatz ein phosphorhaltiges kondensationsfähiges Modifizierungsmittel der Formel V oder VI

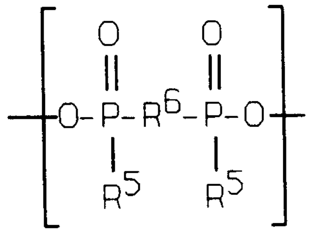 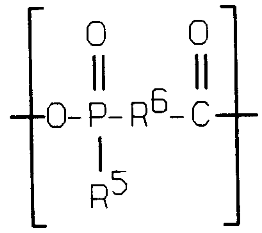

(V) (VI)

worin $R^6$ Alkylen oder Polymethylen mit 2 bis 6 C-Atomen oder Phenyl und $R^5$ Alkyl mit 1 bis 6 C-Atomen, Aryl oder Aralkyl bedeutet, zugefügt wird.

**6.** Verfahren gemäß mindestens einem der Ansprüche 1 bis 5, dadurch gekennzeichnet, daß dem Veresterungs-, Umesterungs- oder Polykondensationsansatz ein phosphorhaltiges kondensationsfähiges Modifizierungsmittel der Formeln V oder VI, worin $R^6$ Ethylen und $R^5$ Methyl, Ethyl, Phenyl, oder o-, m- oder p-Methyl-phenyl, insbesondere Methyl, bedeutet, zugefügt wird.

**7.** Verfahren gemäß mindestens einem der Ansprüche 1 bis 6, dadurch gekennzeichnet, daß die Polykondensation in der Schmelze bei einer Temperatur von 270 bis 290 °C, vorzugsweise von 275 bis 285 °C, durchgeführt wird.

**8.** Verfahren gemäß mindestens einem der Ansprüche 1 bis 7, dadurch gekennzeichnet, daß die Polykondensation in fester Phase bei einer Temperatur von 190 bis 240 °C, vorzugsweise von 205 bis 225 °C, durchgeführt wird.

**9.** Verfahren gemäß mindestens einem der Ansprüche 1 bis 8, dadurch gekennzeichnet, daß die Polykondensation in fester Phase diskontinuierlich, vorzugsweise in einem Taumeltrockner durchgeführt wird.

**10.** Verfahren gemäß mindestens einem der Ansprüche 1 bis 8, dadurch gekennzeichnet, daß die Polykondensation in fester Phase kontinuierlich, vorzugsweise in einem Rohrreaktor durchgeführt wird.

**11.** Verfahren gemäß mindestens einem der Ansprüche 1 bis 10, dadurch gekennzeichnet, daß die Feststoffkondensation bis zu einer IV von 0,65 bis 0,69 dl/g geführt wird.

**12.** Verfahren gemäß mindestens einem der Ansprüche 1 bis 11, dadurch gekennzeichnet, daß in den Polyester ein Mattierungsmittel eingearbeitet wird.

**13.** Verfahren gemäß mindestens einem der Ansprüche 1 bis 12, dadurch gekennzeichnet, daß als Mattierungsmittel $TiO_2$ eingearbeitet wird.

**14.** Polyester, herstellbar nach dem Verfahren des Anspruchs 1, dadurch gekennzeichnet, daß er eine IV von 0,62 bis 0,72 hat, wobei die angegebenen IV-Werte für die Messung bei 25 °C in Dichloressigsäure gelten, ein phosphorhaltiges Modifizierungsmittel enthält und einen Weißgrad von über 85% und eine Gelbzahl von unter 2 aufweist.

**15.** Polyester gemäß Anspruch 14, dadurch gekennzeichnet, daß er mindestens 85 mol% Ethylenterephthalat-Einheiten enthält.

**16.** Polyester gemäß mindestens einem der Ansprüche 14 und 15, dadurch gekennzeichnet, daß die Polyester ein phosphorhaltiges, einkondensiertes Modifizierungsmittel der Formel V oder VI,
worin $R^6$ Alkylen oder Polymethylen mit 2 bis 6 C-Atomen oder Phenyl und $R^5$ Alkyl mit 1 bis 6 C-Atomen, Aryl oder Aralkyl bedeutet, einkondensiert enthalten.

**17.** Polyester gemäß mindestens einem der Ansprüche 14 bis 16, dadurch gekennzeichnet, daß die Polyester 1,5 bis 6 Gew% von phosphorhaltigen Modifizierungsmitteln enthalten.

**18.** Polyester gemäß mindestens einem der Ansprüche 14 bis 17, dadurch gekennzeichnet, daß die Polyester ein Mattierungsmittel enthalten.

**19.** Polyester gemäß mindestens einem der Ansprüche 14 bis 18, dadurch gekennzeichnet, daß die Polyester als Mattierungsmittel $TiO_2$ enthalten.

**20.** Polyesterfaser-Material bestehend aus einem Polyester des Anspruchs 14.

**21.** Polyesterfaser-Material gemäß Anspruch 20, dadurch gekennzeichnet, daß die Fasern einen Weißgrad von über 85% und eine Gelbzahl von unter 2 aufweist.

**22.** Polyesterfaser-Material gemäß mindestens einem der Ansprüche 20 und 21, dadurch gekennzeichnet, daß die Fasern einen Weißgrad von 85 bis 90 und eine Gelbzahl von -2 bis + 2 aufweisen.

**23.** Polyesterfaser-Material gemäß mindestens einem der Ansprüche 20 bis 22, dadurch gekennzeichnet, daß der Polyester in den Fasern eine IV von 0,60 bis 0,66 dl/g aufweist.